# EUROPÄISCHE PATENTSCHRIFT

(11) **EP 4 260 018 B1**
(45) Veröffentlichungstag und Bekanntmachung des Hinweises auf die Patenterteilung: **18.06.2025**
(21) Anmeldenummer: 21823790.7
(22) Anmeldetag: 26.11.2021
(51) Int. Cl.: G01F 1/84, G01F 15/18

(54) **MODULARES CORIOLIS-DURCHFLUSSMESSGERÄT**
MODULAR CORIOLIS-FLOWMETER
DÉBITMÈTRE MODULAIRE DU TYPE CORIOLIS

(30) Priorität: 10.12.2020 DE 102020132986
(43) Veröffentlichungstag der Anmeldung: 18.10.2023
(73) Patentinhaber: Endress+Hauser Flowtec AG, 4153 Reinach (CH)
(72) Erfinder: BITTO, Ennio, 4147 Aesch (CH); SCHWENTER, Benjamin, 4226 Breitenbach (CH); WERNER, Marc, 79639 Grenzach-Wyhlen (DE); POHL, Johan, 79110 Freiburg (DE)
(74) Vertreter: Endress + Hauser Group Services (Deutschland) AG+Co. KG
(86) Internationale Anmeldenummer: PCT/EP2021/083186
(87) Internationale Veröffentlichungsnummer: WO 2022/122420

(56) Entgegenhaltungen:
- DE-A1- 102006 020 265
- US-A- 5 602 345
- US-A1- 2020 116 612
- US-A1- 2020 200 582

## Beschreibung

Die Erfindung betrifft ein modulares Coriolis-Durchflussmessgerät zum Bestimmen einer Prozessgröße eines fließfähigen Mediums.

Feldgeräte der Prozessmesstechnik mit einem Messaufnehmer des Vibrationstypen und besonders Coriolis-Durchflussmessgeräte sind seit vielen Jahren bekannt. Der grundsätzliche Aufbau eines solchen Messgerätes wird beispielsweise in der EP 1 807 681 A1 beschrieben, wobei auf den Aufbau eines gattungsgemäßen Feldgeräts im Rahmen der vorliegenden Erfindung auf diese Druckschrift vollumfänglich Bezug genommen wird.

Typischerweise weisen Coriolis-Durchflussmessgeräte zumindest ein oder mehrere schwingfähige Messrohre auf, welche mittels eines Schwingungserregers in Schwingung versetzt werden können. Diese Schwingungen übertragen sich über die Rohrlänge und werden durch die Art des im Messrohr befindlichen fließfähigen Mediums und dessen Durchflussgeschwindigkeit variiert. Ein Schwingungssensor oder insbesondere zwei voneinander beabstandete Schwingungssensoren können an einer anderen Stelle des Messrohres die variierten Schwingungen in Form eines Messsignals oder mehrerer Messsignale aufnehmen. Aus dem oder den Messsignalen kann eine Auswerteeinheit sodann den Massedurchfluss, die Viskosität und/oder die Dichte des Mediums ermitteln.

Die Schriften US 2020/116612 A1 und US 2020/200582 A1 offenbaren Einwegkonzepte für modulare Coriolis-Durchflussmessgeräte.

Es sind modulare Coriolis-Durchflussmessgeräte mit austauschbaren Einweg-Messrohrmodulen bekannt. So wird beispielsweise in der WO 2011/099989 A1 ein Verfahren zur Herstellung eines monolithisch ausgebildeten Messrohrmoduls eines Coriolis-Durchflussmessgerät mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen Verbindungskörper, welcher dazu eingerichtet ist, auswechselbare Messrohrmodule mit dünnwandigen Kunststoffrohren aufzunehmen und zu stützen. Die Befestigung des Messrohrmoduls in einem mit den notwendigen Erregern und Sensoren ausgestatteten Aufnahmemodul erfolgt über den Verbindungskörper. Modulare Coriolis-Durchflussmessgeräte, bei denen die Erregerspule und die Sensorspulen an einem metallischen Gehäuse angeordnet sind und Erreger und Sensormagnete im Einsatz sind, sind bei Magnetfeldänderungen anfällig für parasitäre Einflüsse auf die Messung der Prozessgröße. Diese lassen sich durch eine werkseitige Justierung nicht vollends kompensieren.

Der Erfindung liegt die Aufgabe zugrunde dem Problem Abhilfe zu schaffen.

Die Aufgabe wird gelöst durch das modulare Coriolis-Durchflussmessgerät nach Anspruch 1.

Das erfindungsgemäße modulare Coriolis-Durchflussmessgerät zum Bestimmen einer Prozessgröße eines fließfähigen Mediums umfasst:
- ein Messrohrmodul,
   wobei das Messrohrmodul mindestens ein Messrohr zum Führen des Mediums umfasst,
   wobei das Messrohrmodul mindestens einen Erregermagnete eines Schwingungserregers zum Erregen des mindestens einen Messrohres aufweist,
   wobei der mindestens eine Erregermagnet an dem mindestens einen Messrohr angeordnet ist,
   wobei das Messrohrmodul mindestens einen Sensormagneten eines Schwingungssensors zum Erfassen einer Schwingung des mindestens einen Messrohres aufweist,
   wobei der mindestens eine Sensormagnet an dem mindestens einen Messrohr angeordnet ist,
- ein Aufnahmemodul mit einer Aufnahme zum Aufnehmen des Messrohrmoduls,
   wobei das Aufnahmemodul mindestens eine Erregerspule des Schwingungserregers mit einer Erregerspulenwindung aufweist, welche mit dem mindestens einen Erregermagneten in magnetischer Wirkung steht,
   wobei das Aufnahmemodul mindestens eine Sensorspule des Schwingungssensors mit einer Sensorspulenwindung aufweist, welche mit dem mindestens einen Sensormagneten in magnetischer Wirkung steht,
   wobei das Aufnahmemodul einen Aufnahmemodulkörper umfasst, welcher zumindest abschnittsweise ein elektrisch leitfähiges und insbesondere ferromagnetisches Material aufweist,
   wobei der Aufnahmemodulkörper eine innere Mantelfläche und eine äußere Mantelfläche aufweist,
   wobei der Aufnahmemodulkörper mindestens eine Öffnung aufweist, welche sich von der inneren Mantelfläche bis zur äußeren Mantelfläche erstreckt,
   wobei in der mindestens einen Öffnung eine Spulenhalterung für die Erregerspule und/oder Sensorspule angeordnet ist,
   wobei die Spulenhalterung einen Spulenhalterungskörper umfasst,
   wobei der Spulenhalterungskörper ein elektrisch isolierendes Material aufweist, insbesondere aus einem elektrisch isolierenden Material gebildet ist,
   wobei die Erregerspulenwindung in Spulenlängsrichtung eine begrenzende Erregerspulenebene und/oder die Sensorspulenwindung eine in Spulenlängsrichtung begrenzende Sensorspulenebene aufweist,
   wobei die Erregerspulenebene und/oder die Sensorspulenebene der Aufnahme zugewandt ist,
   wobei der Erregermagneten eine der mindestens einen Öffnung zugewandten Erregermagnetstirnfläche und/oder der Sensormagnet eine der mindestens einen Öffnung zugewandten Sensormagnetstirnfläche aufweist,
   wobei sich der Spulenhalterungskörper zumindest abschnittsweise zwischen der Erregerspulenebene und der Erregermagnetstirnfläche erstreckt und/oder zumindest abschnittsweise zwischen der Sensorspulenebene und der Sensormagnetstirnfläche erstreckt,
   wobei das Messrohrmodul mechanisch lösbar, insbesondere form- und/oder kraftschlüssig mit dem Aufnahmemodul verbindbar ist,
- eine Mess- und/oder Betriebsschaltung,
   wobei die Mess- und/oder Betriebsschaltung dazu eingerichtet ist, ein Erregersignal auf die mindestens einen Erregerspule aufzubringen,
   wobei die Mess- und/oder Betriebsschaltung dazu eingerichtet ist, ein Sensorsignal an der mindestens einen Sensorspule zu erfassen.

Das durch die mindestens eine Erregerspule erzeugte zeitlich veränderliche Magnetfeld verursacht Wirbelströme in dem elektrisch leitfähigen, metallischen Aufnahmemodulkörper, bzw. in einem Randabschnitt um die Öffnung für die Erregerspule. Die Wirbelströme bewirken ein Verschieben des Nullpunktes, die zudem von der Dichte des Mediums abhängt. Das durch den mindestens einen Sensormagneten erzeugte zeitlich veränderliche Magnetfeld verursacht ebenfalls einen Wirbelstrom im Aufnahmemodulkörper. Dieser verfälscht die Massedurchflussabhängige Messsignal, insbesondere die Phasendifferenz zwischen zwei an unterschiedlichen Sensorspulen gemessene Messsignale. Des Weiteren nimmt die Dämpfung des Messsignales zu. Diese parasitären Einflüsse lassen sich durch den Einsatz von Eintauchspulen (siehe US 5,602,345) oder durch eine genaue werkseitige Justierung kompensieren. Dies ist jedoch bei modular aufgebaute Coriolis-Durchflussmessgeräte mit auswechselbaren Messrohrmodulen nicht möglich. Die konstruktive Ausgestaltung der Spulenhalterung hat den Vorteil, dass ein Austausch des Messrohrmoduls gewährt und gleichzeitig die Induzierung von Wirbelströme minimiert wird.

Vorteilhafte Ausgestaltung der Erfindung sind Gegenstand der Unteransprüche.

Eine Ausgestaltung sieht vor, dass die Erregerspule und/oder die Sensorspule insbesondere jeweils einen Spulendurchmesser *d_{S}* aufweist,
wobei die mindestens eine Öffnung eine Öffnungsmantelfläche aufweist,
wobei die Erregerspule und/oder die Sensorspule einen minimalen Abstand von mindestens 1 × *d_{S}*, insbesondere mindestens 1,5 × *d_{S}* und bevorzugt von mindestens 2 × *d_{S}* zur Öffnungsmantelfläche aufweist.

Eine Ausgestaltung sieht vor, dass der Erregermagnet und/oder der Sensormagnet insbesondere jeweils einen Magnetdurchmesser *d_{M}* aufweist,
wobei das Messrohrmodul derart in der Aufnahme des Aufnahmemoduls angeordnet ist, dass der mindestens eine Erregermagnet und/oder der mindestens eine Sensormagnet insbesondere jeweils einen minimalen Abstand von mehr als 2 × *d_{M},* insbesondere mindestens 2,5 × *d_{M}* und bevorzugt von mindestens 3 × *d_{M}* zum Aufnahmemodulkörper, insbesondere zur Öffnungsmantelfläche aufweist.

Eine Ausgestaltung sieht vor, dass der Spulenhalterung dicht gegenüber Flüssigkeiten in der mindestens einen Öffnung angeordnet ist.

Dies hat den Vorteil, dass eine Reinigung der Aufnahme bei einem Einbau des Aufnahmemoduls in einer biotechnischen Anlage.

Eine Ausgestaltung sieht vor, dass die Spulenhalterung von der äußeren Mantelfläche aus in die mindestens eine Öffnung eingeführt und insbesondere befestigt ist.

Eine Ausgestaltung sieht vor, dass in der mindestens einen Öffnung genau eine Spulenhalterung angeordnet ist,
wobei die mindestens eine Erregerspule und die mindestens eine Sensorspule an der genau einen Spulenhalterung angeordnet sind.

Der Vorteil der beiden zuvor genannten Weiterbildungen ist eine Vereinfachung der Montage. Zudem bewirkt die Reduzierung der Anzahl an Öffnungen das Leckagepotential.

Eine Ausgestaltung sieht vor, dass der Spulenhalterung einen Spulenkörper für die mindestens eine Erregerspule und/oder einen Spulenkörper für die mindestens eine Sensorspule aufweist,
wobei die mindestens eine Erregerspule durch eine Windung eines elektrischen Leiters auf dem Spulenkörper der Erregerspule und/oder die mindestens eine Sensorspule durch eine Windung eines elektrischen Leiters auf dem Spulenkörper der Sensorspule gebildet ist.

Der Spulenhalterung und der Spulenkörper sind bevorzugt einstückig ausgebildet und die Erregerspule und/oder Sensorspule wird durch Aufwickeln des Spulendrahtes auf den Spulenkörper gebildet.

Eine Ausgestaltung sieht vor, dass sich der Spulenhalterungskörper zumindest abschnittsweise zwischen einer die Erregerspule in Spulenlängsrichtung begrenzende Erregerspulenebene und einer Stirnfläche des Erregermagneten erstreckt und/oder zumindest abschnittsweise zwischen einer die Sensorspule in Spulenlängsrichtung begrenzende Sensorspulenebene der Sensorspule und einer Stirnfläche des Sensormagneten erstreckt.

Der Spulenhalterungskörper verdeckt vorzugsweise die Öffnung und die Erregerspule und/oder Sensorspule gegenüber die Aufnahme gegenüber der an der äußeren Mantelfläche des Aufnahmemodulkörpers angeordnete elektronischen Bauteile, wie z.B. die Mess- und/oder Betriebsschaltung.

Eine Ausgestaltung sieht vor, dass der Spulenhalterung zumindest abschnittsweise ein Material aufweist, welches für einen optischen Sensor, insbesondere einen Temperatursensor transparent ist,
wobei der Sensor außerhalb der Aufnahme am Aufnahmemodulkörper angeordnet ist,
wobei der Sensor dazu eingerichtet ist, eine weitere Prozessgröße durch den transparenten Abschnitt hindurch zu ermitteln.

Der transparente Abschnitt ist vorzugsweise als ein dicht angebrachtes Fenster an der Spulenhalterung ausgebildet. Somit lässt sich eine optische Temperaturmessung von einer der Aufnahme abgewandten Seite des Aufnahmemoduls aus realisieren. Vorteilhaft daran ist zudem, dass der optische Sensor somit weder einem Reinigungsmittel noch einer Flüssigkeit ausgesetzt wird.

Eine Ausgestaltung sieht vor, dass die Spulenhalterung zumindest abschnittsweise ein Material aufweist, welches für Radiowellen, insbesondere mit einem Frequenzbereich von 30 bis 500 kHz durchlässig ist,
wobei das Aufnahmemodul ein RFID Lesegerät umfasst,
wobei das Messrohrmodul einen RFID Transponder umfasst.

Metallische Gehäuse weisen abschirmende Eigenschaften gegenüber Radiowellen auf. Um eine fehlerfreie Inbetriebnahme des Messrohrmoduls zu gewährleistet kann es jedoch notwendig sein ein RFID Lesegerät in das Auslesemodul zu integrieren. Es hat sich daher als vorteilhaft herausgestellt, die Spulenhalterung zumindest abschnittsweise so auszugestalten, dass ein an dem Messrohrmodul angebrachter RFID Transponder durch das RFID Auslesegerät am Aufnahmemodul auslesbar ist. Dies kann durch eine Verjüngung oder durch die Wahl eines geeigneten Materials realisiert sein.

Eine Ausgestaltung sieht vor, dass die Erregerspule und/oder die Sensorspule insbesondere jeweils zumindest teilweise in der Spulenhalterung mit eingebettet sind. Dies hat den Vorteil, dass die Lebensdauer der Erregerspule und/oder der Sensorspule deutlich verlängert wird, da ein Eintreten von Feuchtigkeit in die Windung erschwert wird. Die Erfindung wird anhand der nachfolgenden Figuren näher erläutert. Es zeigt:
Fig. 1: ein teilweise in einer Aufnahme eines Aufnahmemoduls angeordnetes Messrohrmodul;
Fig. 2: eine Seitenansicht auf das Aufnahmemodul einer ersten Ausgestaltung des modularen Coriolis-Durchflussmessgerätes;
Fig. 3: eine Seitenansicht auf das Aufnahmemodul einer zweiten Ausgestaltung des modularen Coriolis-Durchflussmessgerätes;
Fig. 4: eine Teilansicht eines Querschnittes durch eine erste Ausgestaltung der Spulenhalterung;
Fig. 5: eine Teilansicht eines Querschnittes durch eine zweite Ausgestaltung der Spulenhalterung; und
Fig. 6: eine Teilansicht eines Querschnittes durch eine dritte Ausgestaltung der Spulenhalterung.

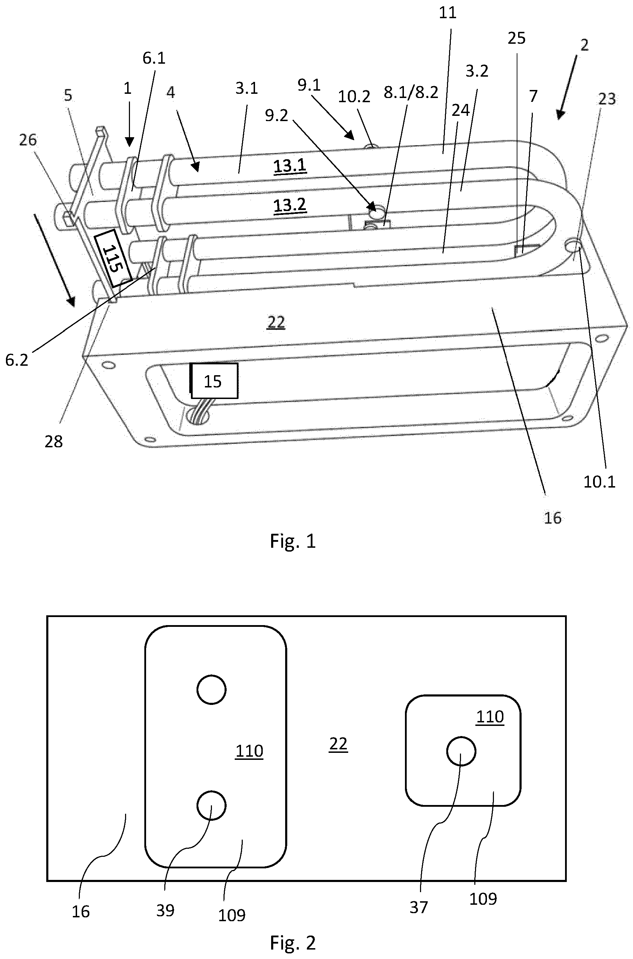

Fig. 1 zeigt eine perspektivische Darstellung eines modularen Coriolis-Durchflussmessgerätes für pharmazeutische Bioprozessanwendungen. Ein Coriolis-Durchflussmessgerät ist ein Messgerät 2 zum Erfassen eines Massedurchflusses, einer Viskosität, einer Dichte und/oder einer davon abgeleiteten Größe eines fließfähigen Mediums. Das Messrohrmodul 4 ist dazu geeignet in eine Aufnahme 23 eines Aufnahmemodul 16 auswechselbar d.h. mechanisch lösbar eingesetzt zu werden. Dafür sind nur einzelne Komponenten des Schwingungserregers und der Schwingungssensoren, in dem Fall die jeweiligen Magnetanordnungen 9.1, 9.2 an dem Messrohrmodul 4 angebracht. Die Magnetanordnung 9.1, 9.2 umfasst mindestens einen Erregermagneten und mindestens einen Sensormagneten. Gemäß der abgebildeten Ausgestaltung sind umfassen die zwei Magnetanordnung 9.1, 9.2 jeweils genau einen Erregermagneten und genau zwei Sensormagnete. Die weiteren Komponenten sind in dem Aufnahmemodul 16, insbesondere in der Aufnahme 23 - insbesondere in einer Spulenaufnahme des Aufnahmemodulkörpers - angeordnet, welche für das Aufnehmen des Messrohrmoduls 4 geeignet und ausgebildet ist. Das Messrohrmodul 4 umfasst zwei gebogenen, parallel zueinander verlaufende Messrohre 3.1, 3.2, welche über eine Koppleranordnung 1, bestehend aus vier Kopplungselementen 6, und über einen Fixierkörperanordnung 5 miteinander verbunden sind. Zwei Kopplungselemente 6.1 sind in einem Einlauf und zwei weiter Kopplungselemente 6.2 sind im Auslauf der jeweiligen Messrohre 3.1, 3.2 stoffschlüssig angebracht. Die Messrohre 3.1, 3.2 sind so geformt, dass die Strömungsrichtung, dargestellt durch zwei Pfeile, im Einlauf entgegengesetzt zur Strömungsrichtung in einem Auslauf orientiert ist. Im Einlauf und im Auslauf kann jeweils ein Strömungsteiler angeordnet sein, welcher einen Prozessanschluss aufweist zum Verbinden mit einem Schlauch- und/oder Kunststoffrohrsystem. Gemäß einer Ausgestaltung kann genau ein Strömungsteilerkörper statt zwei separate Strömungsteiler vorgesehen werden, welcher auf den Einlauf und den Auslauf aufgeschoben wird und mit dazu beiträgt das Messrohrmodul 4 nach dem Einbau in das Aufnahmemodul 16 von der Umgebung zu entkoppeln. Die einzelnen Kopplungselemente 6 sind plattenförmig ausgebildet und ein- oder zweiteilig ausgebildet. Die Kopplungselemente 6 können die Messrohre jeweils vollständig oder nur teilweise umgreifen. Die Messrohre 3.1, 3.2 sind U-förmig ausgebildet, d.h. sie weisen jeweils zwei im Wesentlichen parallel zueinander verlaufende Schenkel 11 auf, die über einen gebogenen Teilabschnitt verbunden sind. An jedem Messrohre 3.1, 3.2 ist eine Magnetanordnung 9.1, 9.2 angeordnet. Im gebogenen Teilabschnitt ist ein Magnet 10.1 - insbesondere ein Erregermagnet - der Magnetanordnung 9.1 angeordnet, welcher eine Komponente des Schwingungserregers bildet. In den zwei Schenkeln 11 sind jeweils ein Magnet 10.2 - insbesondere jeweils ein Sensormagnet - angebracht, welche ein Teil des Schwingungserregers bildet. Die Magnete 10 sind an Anbringflächen angebracht. Die Anbringflächen befinden sich in der Ausgestaltung an den jeweiligen Messrohren 3.1, 3.2.

Das abgebildete Messrohrmodul 4 ist teilweise in eine Aufnahme 23 eines Aufnahmemoduls 16 eingeführt. Ein Pfeil deutet die Einführrichtung an. Diese verläuft in der Ausgestaltung senkrecht zu einer Längsrichtung der Aufnahme 23. Die Aufnahme kann auch derart ausgebildet sein, dass das Messrohrmodul 4 in Längsrichtung der Aufnahme einzuführen ist (siehe Fig. 2A bis C). Das Aufnahmemodul 16 weist eine Mess- und/oder Betriebsschaltung 15 auf, welche mit den Schwingungserregern und Schwingungssensoren, insbesondere mit den jeweiligen Spulensystemen verbunden und dazu eingerichtet sind ein zeitlich wechselndes Magnetfeld zu erzeugen und/oder zu erfassen. Das Aufnahmemodul 16 weist einen Aufnahmemodulkörper 22 auf, in der sich die Aufnahme 29 befindet. Der Verbindungskörper 5 des Messrohrmoduls 4 weist Montageflächen 26 auf, welche dazu dienen das Messrohrmodul 4 in eine vorgegebene Position in das Aufnahmemodul 16 anzuordnen. Gemäß der abgebildeten Ausgestaltung zeigt das Lot der Montagefläche 26 senkrecht zur Längsrichtung des Messrohrmoduls 4. Gemäß einer weiteren vorteilhaften Ausgestaltung zeigt das Lot der Montagefläche 26 in Richtung der Längsachse des Messrohrmoduls 4. Die mit der Montagefläche 26 des Verbindungskörpers 5 in Kontakt stehende Fläche des Aufnahmemodulkörpers 22 ist die Auflagefläche 27.

Das Aufnahmemodul 16 weist zwei parallel zueinander orientierte Seitenflächen auf, welche die Aufnahme 29 quer zur Längsrichtung der Aufnahme begrenzen. In den Seitenflächen sind die Spulenvorrichtungen 25 der Schwingungssensoren 8.1, 8.2 und die Spulenvorrichtung 25 des Schwingungserregers 7 angeordnet. Die Spulenvorrichtungen 25 der Schwingungssensoren 8.1, 8.2 sind in Längsrichtung der Aufnahme zur Spulenvorrichtung 25 des Schwingungserregers 7 angeordnet. Alle drei Spulenvorrichtungen 25 befinden sich in einer Spulenebene. Des Weiteren sind die drei Spulenvorrichtungen 25 als Plattenspule ausgebildet und in die Seitenfläche versenkt. An der Seitenfläche sind drei Spulenvorrichtungen 25 im Wesentlich so angeordnet, dass sie sich im eingebauten Zustand des Messrohrmoduls 3 gegenüber von den entsprechenden Magnetanordnungen 9.1, 9.2 befinden. In den beiden Seitenflächen ist jeweils eine Führung eingearbeitet, welche sich senkrecht zur Längsrichtung der Aufnahme 29 und parallel zur Spulenebene erstreckt. Gemäß der abgebildeten Ausgestaltung erstreckt sich die Aufnahme über zwei Stirnseiten der Aufnahme 29. Dies ermöglicht ein Einführen des Messrohrmoduls 4 senkrecht zur Längsrichtung des Messrohrmoduls 4. Gemäß einer weiteren Ausgestaltung erstreckt sich die Aufnahme 23 ausschließlich über eine Stirnseite. In dem Fall ist das Messrohrmodul 4 in Längsrichtung des Messrohrmoduls 4 - oder des Aufnahmemoduls 16 - in das Aufnahmemodul 16 einzuführen. Die Erregerspulen weisen jeweils eine Erregerspulenwindung auf, die in Spulenlängsrichtung eine begrenzende Erregerspulenebene aufweisen. Zudem weisen die Sensorspulen jeweils eine Sensorspulenwindung auf, die eine in Spulenlängsrichtung begrenzende Sensorspulenebene umfasst. Die Erregerspulenebene und/oder die Sensorspulenebene sind der Aufnahme 23 zugewandt. Der Erregermagneten weist eine der Erregerspule zugewandten Erregermagnetstirnfläche und der Sensormagnet weist eine der Sensorspule zugewandten Sensormagnetstirnfläche auf. Die Erregermagnetstirnfläche ist zur Erregerspulenebene beabstandet, ebenso die Sensormagnetstirnfläche zur Sensorspulenebene. Eine Mess- und/oder Betriebsschaltung 15 ist am Aufnahmemodulkörper 22 angebracht und dazu eingerichtet, ein Erregersignal auf die Erregerspulen aufzubringen und ein Sensorsignal an den Sensorspulen zu erfassen. Weiterhin ist ein RFID Transponder 115 mit einem Datenspeicher - in welchem messrohrmodulspezifische Daten hinterlegt sind - an der Fixierkörperanordnung 5 des Messrohrmoduls 4 angebracht. Der RFID Transponder 115 ist durch ein RFID Lesegerät auslesbar. Das RFID Lesegerät kann am Aufnahmemodul 16 angebracht sein oder als ein Handheld ausgebildet sein.

Fig. 2 zeigt eine Seitenansicht auf das Aufnahmemodul 16 einer ersten Ausgestaltung des modularen Coriolis-Durchflussmessgerätes zum Bestimmen einer Prozessgröße eines fließfähigen Mediums. Das Aufnahmemodul 16 weist eine Aufnahme auf zum Aufnehmen eines Messrohrmoduls. Weiterhin umfasst das Aufnahmemodul 16 zwei Erregerspulen 37 des Schwingungserregers - mit jeweils einer Erregerspulenwindung -, welche jeweils mit dem zugehörigen Erregermagneten des Messrohrmoduls in magnetischer Wirkung stehen. Dabei sind die Erregerspulen 37 an unterschiedlichen Seiten des Aufnahmemoduls 16 angeordnet. Zudem umfasst das Aufnahmemodul 16 vier Sensorspulen 39 des Schwingungssensors - mit jeweils einer Sensorspulenwindung -, welche jeweils mit dem zugehörigen Sensormagneten in magnetischer Wirkung stehen. Das Aufnahmemodul 16 weist einen Aufnahmemodulkörper 22 auf, welcher zumindest abschnittsweise ein elektrisch leitfähiges und insbesondere ferromagnetisches Material aufweist. Der Aufnahmemodulkörper 22 weist eine innere Mantelfläche, eine äußere Mantelfläche und eine Öffnung 79 auf, welche sich von der inneren Mantelfläche bis zur äußeren Mantelfläche erstreckt. In der abgebildeten Ausgestaltung weist der Aufnahmemodulkörper 22 zwei Öffnungen 79 auf einer Seite und zweite weitere Öffnungen auf einer gegenüberliegenden Seite. In den zwei Öffnungen ist jeweils eine Spulenhalterung 109 für die Erregerspule 37 und/oder die zwei Sensorspulen 39 angeordnet. Die Spulenhalterungen 109 umfassen jeweils einen Spulenhalterungskörper 110, welcher ein elektrisch isolierendes Material aufweist, bzw. aus einem elektrisch isolierenden Material, wie z.B. Kunststoff gebildet ist.

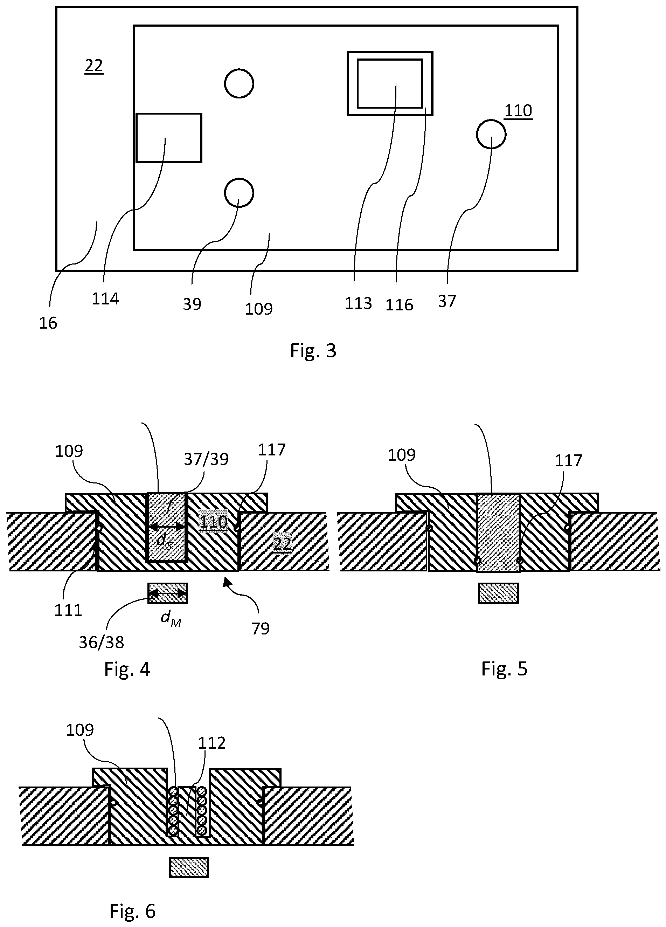

Fig. 3 zeigt eine Seitenansicht auf das Aufnahmemodul 16 einer zweiten Ausgestaltung des modularen Coriolis-Durchflussmessgerätes. Die zweite Ausgestaltung unterscheidet sich von der ersten Ausgestaltung im Wesentlichen darin, dass das Aufnahmemodul 16 auf den beiden gegenüberliegenden Seiten nur genau eine Öffnung 79 für genau eine Spulenhalterung 109 aufweist. In der Spulenhalterung 109 sind eine Erregerspule 37 und zwei Sensorspulen 39 angeordnet. Zudem ist an der Spulenhalterung 109 ein RFID Lesegerät 114 zum Ermitteln in einem Datenspeicher eines RFID Transponders hinterlegte messrohrmodulspezifische Daten und ein optischer Sensor 113 angeordnet, welcher durch einen transparenten Abschnitt 116 in dem Spulenhalterungskörper 110 hindurch die Temperatur oder eine von der Temperatur des mindestens einen Messrohres und/oder des zu führenden Mediums abhängige Größe optisch detektiert.

Fig. 4 zeigt eine Teilansicht eines Querschnittes durch eine erste Ausgestaltung der Spulenhalterung 109, die in einer Öffnung 79 mit einer Öffnungsmantelfläche 111 von der äußeren Mantelfläche aus angeordnet und befestigt ist. Die Öffnungsmantelfläche 111 begrenzt die Öffnung 79 in radialer Richtung zum Aufnahmemodulkörper 22. Die Spulenhalterung 109 weist eine Spulenaufnahme 118 für die Erregerspule 37 und/oder Sensorspule 39 auf. Die Spulenhalterung 109 weist einen Spulenhalterungskörper 110 auf, welcher sich zumindest abschnittsweise zwischen der Erregerspulenebene und der Erregermagnetstirnfläche erstreckt und/oder zumindest abschnittsweise zwischen der Sensorspulenebene und der Sensormagnetstirnfläche erstreckt. Gemäß der abgebildeten Ausgestaltung füllt der Spulenhalterungskörper 110 die Öffnung aus, so dass die Erregerspule 37 und/oder die Sensorspule 39 durch ebendiesen in Längsrichtung verdeckt wird. Damit die Spulenhalterung 109 dicht gegenüber Flüssigkeiten in der einen Öffnung angeordnet ist, ist ein Dichtmittel 117 vorgesehen. Die Erregerspule 37 und/oder die Sensorspule 39 weist einen Spulendurchmesser *d_{S}* auf. Erfindungsgemäß weist die Erregerspule 37 und/oder die Sensorspule 39 einen minimalen Abstand von mindestens 1 × *d_{S}*, insbesondere mindestens 1,5 × *d_{S}* und bevorzugt von mindestens 2 × *d_{S}* zur Öffnungsmantelfläche 111 auf. Weiterhin weist der Erregermagnet 36 und/oder der Sensormagnet 38 einen Magnetdurchmesser *d_{M}* auf. Erfindungsgemäß ist das Messrohrmodul derart in der Aufnahme des Aufnahmemoduls angeordnet, dass der Erregermagnet 36 und/oder der Sensormagnet 38 in einen minimalen Abstand von mehr als 2 × *d_{M},* insbesondere mindestens 2,5 × *d_{M}* und bevorzugt von mindestens 3 × *d_{M}* zum Aufnahmemodulkörper, insbesondere zur Öffnungsmantelfläche beabstandet. Gemäß einer Weiterbildung der ersten Ausgestaltung handelt es sich bei der Spulenhalterung 109 um ein Spritzgussteil, in welches die Erregerspule 37 und/oder die Sensorspule 39 zumindest teilweise mit eingebettet ist. Die Spulenhalterung 109 weist zudem einen zumindest teilweise umlaufenden und hervorstehenden Randabschnitt auf, der auf der Außenseite des Aufnahmemodulkörpers 22 aufliegt.

Fig. 5 zeigt eine Teilansicht eines Querschnittes durch eine zweite Ausgestaltung der Spulenhalterung 110. Die zweite Ausgestaltung unterscheidet sich von der ersten Ausgestaltung im Wesentlichen in der Anordnung der Erregerspule 37 und/oder Sensorspule 39 im Spulenhalterungskörper 110. Die Spulenaufnahme der ersten Ausgestaltung ist durch eine Durchgangsöffnung ersetzt in welche die Erregerspule 37 und/oder die Sensorspule 39 angeordnet ist. Um die Durchgangsöffnung 119 dicht gegen Flüssigkeiten aus der Aufnahme zu machen, ist ein weiteres Dichtmittel 117 vorgesehen.

Fig. 6 zeigt eine Teilansicht eines Querschnittes durch eine dritte Ausgestaltung der Spulenhalterung 109. Die dritte Ausgestaltung unterscheidet sich von der ersten Ausgestaltung im Wesentlichen dadurch, dass die Erregerspule 37 und/oder Sensorspule 39 nicht in einer Spulenaufnahme angeordnet ist. An Stelle der Spulenaufnahme befindet sich ein Spulenkörper 112, welcher monolithisch mit dem Spulenhalterungskörper 110 verbunden ist und zum Aufwickeln durch einen Spulendraht zur Bildung einer Erregerspule 37 und/oder Sensorspule 39 dient.

### Bezugszeichenliste

Koppleranordnung 1
Messgerät 2
Messrohr 3
Messrohrmodul 4
Fixierkörperanordnung 5
Kopplerelement 6
Schwingungserreger 7
Schwingungssensor 8
Magnetanordnung 9
Magnet 10
Schenkel 11
Messrohrkörper 13
Mess- und/oder Betriebsschaltung 15
Aufnahmemodul 16
Aufnahmemodulkörper 22
Aufnahme 23
Seitenfläche 24
Montagefläche 26
Führung 28
Erregermagnet 36
Erregerspule 37
Sensormagnet 38
Sensorspule 39
Öffnung 79
Spulenhalterung 109
Spulenhalterungskörper 110
Öffnungsmantelfläche 111
Spulenkörper 112
optischer Sensor 113
RFID Lesegerät 114
RFID Transponder 115
transparenter Ausschnitt 116
Dichtmittel 117
Spulenaufnahme 118
Durchgangsöffnung 119

## Patentansprüche

1. Modulares Coriolis-Durchflussmessgerät zum Bestimmen einer Prozessgröße eines fließfähigen Mediums, umfassend:
- ein Messrohrmodul (4),
wobei das Messrohrmodul (4) mindestens ein Messrohr (3) zum Führen des Mediums umfasst,
wobei das Messrohrmodul (4) mindestens einen Erregermagnete (36) eines Schwingungserregers zum Erregen des mindestens einen Messrohres (3) aufweist,
wobei der mindestens eine Erregermagnet (36) an dem mindestens einen Messrohr (3) angeordnet ist,
wobei das Messrohrmodul (4) mindestens einen Sensormagneten (38) eines Schwingungssensors zum Erfassen einer Schwingung des mindestens einen Messrohres (3) aufweist,
wobei der mindestens eine Sensormagnet (38) an dem mindestens einen Messrohr (3) angeordnet ist,
- ein Aufnahmemodul (16) mit einer Aufnahme (23) zum Aufnehmen des Messrohrmoduls (4),
wobei das Aufnahmemodul (16) mindestens eine Erregerspule (37) des Schwingungserregers mit einer Erregerspulenwindung aufweist, welche mit dem mindestens einen Erregermagneten (36) in magnetischer Wirkung steht,
wobei das Aufnahmemodul (16) mindestens eine Sensorspule (39) des Schwingungssensors mit einer Sensorspulenwindung aufweist, welche mit dem mindestens einen Sensormagneten (38) in magnetischer Wirkung steht,
wobei das Aufnahmemodul (16) einen Aufnahmemodulkörper (22) umfasst, welcher zumindest abschnittsweise ein elektrisch leitfähiges und insbesondere ferromagnetisches Material aufweist,
wobei der Aufnahmemodulkörper (22) eine innere Mantelfläche und eine äußere Mantelfläche aufweist,
wobei der Aufnahmemodulkörper (22) mindestens eine Öffnung (79) aufweist, welche sich von der inneren Mantelfläche bis zur äußeren Mantelfläche erstreckt,
wobei in der mindestens einen Öffnung (79) eine Spulenhalterung (109) für die Erregerspule (37) und/oder Sensorspule (39) angeordnet ist,
wobei die Spulenhalterung (109) einen Spulenhalterungskörper (110) umfasst,
wobei der Spulenhalterungskörper (110) ein elektrisch isolierendes Material aufweist, insbesondere aus einem elektrisch isolierenden Material gebildet ist,
wobei die Erregerspulenwindung in Spulenlängsrichtung eine begrenzende Erregerspulenebene und/oder die Sensorsplösulenwindung eine in Spulenlängsrichtung begrenzende Sensorspulenebene aufweist,
wobei die Erregerspulenebene und/oder die Sensorspulenebene der Aufnahme (23) zugewandt ist,
wobei der mindestens eine Erregermagnet (36) eine der mindestens einen Öffnung (79) zugewandten Erregermagnetstirnfläche und/oder der Sensormagnet (38) eine der mindestens einen Öffnung (79) zugewandten Sensormagnetstirnfläche aufweist,
wobei das Messrohrmodul (4) mechanisch lösbar, insbesondere form- und/oder kraftschlüssig mit dem Aufnahmemodul (16) verbindbar ist,
- eine Mess- und/oder Betriebsschaltung (15),
wobei die Mess- und/oder Betriebsschaltung (15) dazu eingerichtet ist, ein Erregersignal auf die mindestens einen Erregerspule (37) aufzubringen,
wobei die Mess- und/oder Betriebsschaltung (15) dazu eingerichtet ist, ein Sensorsignal an der mindestens einen Sensorspule (39) zu erfassen.

2. Modulares Coriolis-Durchflussmessgerät nach dem vorhergehenden Anspruch,
wobei sich der Spulenhalterungskörper (110) zumindest abschnittsweise zwischen der Erregerspulenebene und der Erregermagnetstirnfläche erstreckt und/oder zumindest abschnittsweise zwischen der Sensorspulenebene und der Sensormagnetstirnfläche erstreckt.

3. Modulares Coriolis-Durchflussmessgerät nach Anspruch 1 und/oder 2,
wobei die Erregerspule (37) und/oder die Sensorspule (39) insbesondere jeweils einen Spulendurchmesser *d_{S}* aufweist,
wobei die mindestens eine Öffnung (79) eine Öffnungsmantelfläche (111) aufweist,
wobei die Erregerspule und/oder die Sensorspule einen minimalen Abstand von mindestens 1 × *d_{S}*, insbesondere mindestens 1,5 × *d_{S}* und bevorzugt von mindestens 2 × *d_{S}* zur Öffnungsmantelfläche aufweist.

4. Modulares Coriolis-Durchflussmessgerät nach dem vorhergehenden Anspruch,
wobei der mindestens eine Erregermagnet (36) und/oder der mindestens eine Sensormagnet (38) insbesondere jeweils einen Magnetdurchmesser *d_{M}* aufweist,
wobei das Messrohrmodul (4) derart in der Aufnahme (2) angeordnet ist, dass der mindestens eine Erregermagnet (36) und/oder der mindestens eine Sensormagnet (38) insbesondere jeweils einen minimalen Abstand von mehr als 2 × *d_{M},* insbesondere mindestens 2,5 × *d_{M}* und bevorzugt von mindestens 3 × *d_{M}* zum Aufnahmemodulkörper (22), insbesondere zur Öffnungsmantelfläche (111) aufweist.

5. Modulares Coriolis-Durchflussmessgerät nach mindestens einem der vorhergehenden Ansprüche,
wobei der Spulenhalterung (109) dicht gegenüber Flüssigkeiten in der mindestens einen Öffnung (79) angeordnet ist.

6. Modulares Coriolis-Durchflussmessgerät nach mindestens einem der vorhergehenden Ansprüche,
wobei die Spulenhalterung (109) von der äußeren Mantelfläche aus in die mindestens eine Öffnung (79) eingeführt und insbesondere befestigt ist.

7. Modulares Coriolis-Durchflussmessgerät nach mindestens einem der vorhergehenden Ansprüche,
wobei in der mindestens einen Öffnung (79) genau eine Spulenhalterung (109) angeordnet ist,
wobei die mindestens eine Erregerspule (37) und die mindestens eine Sensorspule (39) an der genau einen Spulenhalterung (109) angeordnet sind.

8. Modulares Coriolis-Durchflussmessgerät nach mindestens einem der vorhergehenden Ansprüche,
wobei der Spulenhalterung (109) einen Spulenkörper (112) für die mindestens eine Erregerspule (37) und/oder einen Spulenkörper (112) für die mindestens eine Sensorspule (39) aufweist,
wobei die mindestens eine Erregerspule (37) durch eine Windung eines elektrischen Leiters auf dem Spulenkörper (112) und/oder die mindestens eine Sensorspule (39) durch eine Windung eines elektrischen Leiters auf dem Spulenkörper (112) gebildet ist.

9. Modulares Coriolis-Durchflussmessgerät nach mindestens einem der vorhergehenden Ansprüche,
wobei der Spulenhalterung (109) zumindest abschnittsweise ein Material aufweist, welches für einen optischen Sensor (113), insbesondere einen Temperatursensor transparent ist,
wobei der Sensor (113) außerhalb der Aufnahme (23) am Aufnahmemodulkörper (22) angeordnet ist,
wobei der Sensor (113) dazu eingerichtet ist, eine weitere Prozessgröße durch den transparenten Abschnitt hindurch zu ermitteln.

10. Modulares Coriolis-Durchflussmessgerät nach mindestens einem der vorhergehenden Ansprüche,
wobei der Spulenhalterung (109) zumindest abschnittsweise ein Material aufweist, welches für Radiowellen, insbesondere mit einem Frequenzbereich von 30 bis 500 kHz durchlässig ist,
wobei das Aufnahmemodul (16) ein RFID Lesegerät (114) umfasst,
wobei das Messrohrmodul (4) einen RFID Transponder (115) umfasst.

11. Modulares Coriolis-Durchflussmessgerät nach mindestens einem der vorhergehenden Ansprüche,
wobei die Erregerspule (37) und/oder die Sensorspule (39) insbesondere jeweils zumindest teilweise in der Spulenhalterung (119) mit eingebettet sind.

## Claims

1. Modular Coriolis flowmeter for determining a process variable of a flowable medium, comprising:
- a measuring tube module (4),
wherein the measuring tube module (4) comprises at least one measuring tube (3) for guiding the medium,
wherein the measuring tube module (4) has at least one exciter magnet (36) of an oscillation exciter for exciting the at least one measuring tube (3),
wherein the at least one exciter magnet (36) is arranged on the at least one measuring tube (3),
wherein the measuring tube module (4) has at least one sensor magnet (38) of a vibration sensor for detecting a vibration of the at least one measuring tube (3),
wherein the at least one sensor magnet (38) is arranged on the at least one measuring tube (3),
- a receiving module (16) with a receptacle (23) for receiving the measuring tube module (4),
wherein the receiving module (16) has at least one excitation coil (37) of the vibration exciter with an excitation coil winding which is in magnetic action with the at least one excitation magnet (36),
wherein the receiving module (16) has at least one sensor coil (39) of the vibration sensor with a sensor coil winding which is in magnetic action with the at least one sensor magnet (38),
wherein the receiving module (16) comprises a receiving module body (22) which has an electrically conductive and in particular ferromagnetic material at least in sections
wherein the receiving module body (22) has an inner lateral surface and an outer lateral surface,
wherein the receiving module body (22) has at least one opening (79) which extends from the inner lateral surface to the outer lateral surface,
wherein a coil holder (109) for the excitation coil (37) and/or sensor coil (39) is arranged in the at least one opening (79),
wherein the bobbin holder (109) comprises a bobbin holder body (110),
wherein the coil holder body (110) comprises an electrically insulating material, in particular is formed from an electrically insulating material,
wherein the excitation coil winding has a limiting excitation coil plane in the longitudinal direction of the coil and/or the sensor solution coil winding has a limiting sensor coil plane in the longitudinal direction of the coil,
with the excitation coil plane and/or the sensor coil plane facing the receptacle (23),
wherein the at least one exciter magnet (36) has an exciter magnet end face facing the at least one opening (79) and/or the sensor magnet (38) has a sensor magnet end face facing the at least one opening (79),
wherein the measuring tube module (4) can be mechanically detachably connected to the receiving module (16), in particular in a form-locking and/or force-locking manner,
- a measuring and/or operating circuit (15),
wherein the measuring and/or operating circuit (15) is set up to apply an excitation signal to the at least one excitation coil (37),
wherein the measuring and/or operating circuit (15) is set up to detect a sensor signal at the at least one sensor coil (39).

2. Modular Coriolis flowmeter according to the preceding claim,
wherein the coil holder body (110) extends at least in sections between the excitation coil plane and the excitation magnet end face and/or extends at least in sections between the sensor coil plane and the sensor magnet end face.

3. Modular Coriolis flowmeter according to claim 1 and/or 2,
wherein the excitation coil (37) and/or the sensor coil (39) in particular each has a coil diameter *d_{S}*,
wherein the at least one opening (79) has an opening shell surface (111),
wherein the excitation coil and/or the sensor coil has a minimum distance of at least1 × *d_{S}*, in particular at least1,5 × *d_{S}* and preferably at least2 × *d_{S}* from the opening surface.

4. Modular Coriolis flowmeter according to the preceding claim,
wherein the at least one exciter magnet (36) and/or the at least one sensor magnet (38) in particular each has a magnet diameter *d_{M}*,
wherein the measuring tube module (4) is arranged in the receptacle (2) in such a way that the at least one exciter magnet (36) and/or the at least one sensor magnet (38) in particular each has a minimum distance of more than 2 × *d_{M}*, in particular at least 2,5 × *d_{M}* and preferably of at least 3 × *d_{M}* from the receptacle module body (22), in particular from the opening surface (111).

5. Modular Coriolis flowmeter according to at least one of the preceding claims,
wherein the coil holder (109) is arranged tightly against liquids in the at least one opening (79).

6. Modular Coriolis flowmeter according to at least one of the preceding claims,
wherein the bobbin holder (109) is inserted from the outer casing surface into the at least one opening (79) and, in particular, is fastened.

7. Modular Coriolis flowmeter according to at least one of the preceding claims,
wherein exactly one bobbin holder (109) is arranged in the at least one opening (79),
wherein the at least one excitation coil (37) and the at least one sensor coil (39) are arranged on the exactly one coil holder (109).

8. Modular Coriolis flowmeter according to at least one of the preceding claims,
wherein the coil holder (109) has a coil former (112) for the at least one excitation coil (37) and/or a coil former (112) for the at least one sensor coil (39),
wherein the at least one excitation coil (37) is formed by a turn of an electrical conductor on the coil former (112) and/or the at least one sensor coil (39) is formed by a turn of an electrical conductor on the coil former (112).

9. Modular Coriolis flowmeter according to at least one of the preceding claims,
wherein the coil holder (109) has, at least in sections, a material which is transparent for an optical sensor (113), in particular a temperature sensor,
wherein the sensor (113) is arranged outside the receptacle (23) on the receptacle module body (22),
wherein the sensor (113) is set up to determine a further process variable through the transparent section

10. Modular Coriolis flowmeter according to at least one of the preceding claims,
wherein the coil holder (109) has at least in sections a material which is permeable to radio waves, in particular with a frequency range of 30 to 500 kHz,
wherein the receiving module (16) comprises an RFID reader (114),
wherein the measuring tube module (4) comprises an RFID transponder (115).

11. Modular Coriolis flowmeter according to at least one of the preceding claims,
wherein the excitation coil (37) and/or the sensor coil (39) are in particular each at least partially embedded in the coil holder (119).

## Revendications

1. Débitmètre à effet Coriolis modulaire pour déterminer une grandeur de processus d'un milieu fluide, comprenant :
- un module de tube de mesure (4),
le module de tube de mesure (4) comprenant au moins un tube de mesure (3) pour guider le fluide,
le module de tube de mesure (4) présentant au moins un aimant d'excitation (36) d'un excitateur de vibrations pour exciter le au moins un tube de mesure (3),
dans lequel ledit au moins un aimant d'excitation (36) est disposé sur ledit au moins un tube de mesure (3),
dans lequel le module de tube de mesure (4) présente au moins un aimant de capteur (38) d'un capteur de vibrations pour détecter une vibration du au moins un tube de mesure (3),
dans lequel ledit au moins un aimant de capteur (38) est disposé sur ledit au moins un tube de mesure (3),
- un module de réception (16) avec un logement (23) pour recevoir le module de tube de mesure (4),
dans lequel le module de réception (16) présente au moins une bobine d'excitation (37) de l'excitateur de vibrations avec une spire de bobine d'excitation qui est en action magnétique avec le au moins un aimant d'excitation (36),
dans lequel le module de réception (16) présente au moins une bobine de capteur (39) du capteur de vibrations avec un enroulement de bobine de capteur qui est en action magnétique avec le au moins un aimant de capteur (38),
le module de réception (16) comprenant un corps de module de réception (22) qui présente au moins par sections un matériau électriquement conducteur et en particulier ferromagnétique
le corps de module de réception (22) présentant une surface d'enveloppe intérieure et une surface d'enveloppe extérieure,
dans lequel le corps de module de réception (22) présente au moins une ouverture (79) qui s'étend de la surface d'enveloppe intérieure à la surface d'enveloppe extérieure,
un support de bobine (109) pour la bobine d'excitation (37) et/ou la bobine de détection (39) étant disposé dans la au moins une ouverture (79),
dans lequel le support de bobine (109) comprend un corps de support de bobine (110),
dans lequel le corps de support de bobine (110) comprend un matériau électriquement isolant, en particulier est formé d'un matériau électriquement isolant,
la spire de la bobine d'excitation présentant un plan de bobine d'excitation limitant dans la direction longitudinale de la bobine et/ou la spire de la bobine de détection présentant un plan de bobine de détection limitant dans la direction longitudinale de la bobine,
le plan de la bobine d'excitation et/ou le plan de la bobine de détection étant orienté vers le logement (23),
l'au moins un aimant d'excitation (36) présentant une face d'aimant d'excitation tournée vers l'au moins une ouverture (79) et/ou l'aimant de capteur (38) présentant une face d'aimant de capteur tournée vers l'au moins une ouverture (79),
le module de tube de mesure (4) pouvant être relié au module de réception (16) de manière mécaniquement détachable, en particulier par complémentarité de forme et/ou par force,
- un circuit de mesure et/ou de fonctionnement (15),
dans lequel le circuit de mesure et/ou de fonctionnement (15) est conçu pour appliquer un signal d'excitation à la au moins une bobine d'excitation (37),
dans lequel le circuit de mesure et/ou de fonctionnement (15) est conçu pour détecter un signal de capteur au niveau de la au moins une bobine de capteur (39).

2. Débitmètre à effet Coriolis modulaire selon la revendication précédente,
dans lequel le corps de support de bobine (110) s'étend au moins en partie entre le plan de la bobine d'excitation et la face d'extrémité de l'aimant d'excitation et/ou s'étend au moins en partie entre le plan de la bobine de détection et la face d'extrémité de l'aimant de détection.

3. Débitmètre à effet Coriolis modulaire selon la revendication 1 et/ou 2,
la bobine d'excitation (37) et/ou la bobine de détection (39) présentant en particulier chacune un diamètre de bobine *d_{S}*,
dans lequel la au moins une ouverture (79) présente une surface d'enveloppe d'ouverture (111),
la bobine d'excitation et/ou la bobine de détection présentant une distance minimale d'au moins1 × *d_{S}*, en particulier d'au moins1,5 × *d_{S}* et de préférence d'au moins2 × *d_{S}* par rapport à la surface latérale de l'ouverture.

4. Débitmètre à effet Coriolis modulaire selon la revendication précédente,
l'au moins un aimant d'excitation (36) et/ou l'au moins un aimant de détection (38) présentant en particulier chacun un diamètre d'aimant *d_{M}*,
le module de tube de mesure (4) étant disposé dans le logement (2) de telle sorte que le au moins un aimant d'excitation (36) et/ou le au moins un aimant de capteur (38) présentent en particulier chacun une distance minimale de plus de2 × *d_{M}*, en particulier d'au moins2,5 × *d_{M}* et de préférence d'au moins3 × *d_{M}* par rapport au corps de module de logement (22), en particulier par rapport à la surface d'enveloppe d'ouverture (111).

5. Débitmètre à effet Coriolis modulaire selon au moins l'une des revendications précédentes,
dans lequel le support de bobine (109) est disposé de manière étanche aux liquides dans ladite au moins une ouverture (79).

6. Débitmètre à effet Coriolis modulaire selon au moins l'une des revendications précédentes,
dans lequel le support de bobine (109) est introduit et en particulier fixé dans la au moins une ouverture (79) à partir de la surface d'enveloppe extérieure.

7. Débitmètre à effet Coriolis modulaire selon au moins l'une des revendications précédentes,
dans lequel exactement un support de bobine (109) est disposé dans ladite au moins une ouverture (79),
dans lequel ladite au moins une bobine d'excitation (37) et ladite au moins une bobine de détection (39) sont disposées sur ledit au moins un support de bobine (109).

8. Débitmètre à effet Coriolis modulaire selon au moins l'une des revendications précédentes,
dans lequel le support de bobine (109) comprend un corps de bobine (112) pour la au moins une bobine d'excitation (37) et/ou un corps de bobine (112) pour la au moins une bobine de détection (39),
dans lequel ladite au moins une bobine d'excitation (37) est formée par une spire d'un conducteur électrique sur ledit corps de bobine (112) et/ou ladite au moins une bobine de détection (39) est formée par une spire d'un conducteur électrique sur ledit corps de bobine (112).

9. Débitmètre à effet Coriolis modulaire selon au moins l'une des revendications précédentes,
dans lequel le support de bobine (109) comprend au moins par sections un matériau qui est transparent pour un capteur optique (113), en particulier un capteur de température,
le capteur (113) étant disposé à l'extérieur du logement (23) sur le corps du module de réception (22),
dans lequel le capteur (113) est adapté pour déterminer une autre grandeur de processus à travers la section transparente

10. Débitmètre à effet Coriolis modulaire selon au moins l'une des revendications précédentes,
dans lequel le support de bobine (109) comprend au moins par sections un matériau qui est perméable aux ondes radio, en particulier avec une plage de fréquences de 30 à 500 kHz,
dans lequel le module d'enregistrement (16) comprend un lecteur RFID (114),
dans lequel le module de tube de mesure (4) comprend un transpondeur RFID (115).

11. Débitmètre à effet Coriolis modulaire selon au moins l'une des revendications précédentes,
la bobine d'excitation (37) et/ou la bobine de détection (39) étant en particulier respectivement au moins partiellement encastrées dans le support de bobine (119).
